# EUROPEAN PATENT APPLICATION

(11) **EP 4 620 790 A1**
(43) Date of publication of application: **24.09.2025**
(21) Application number: 23903039.8
(22) Date of filing: 30.08.2023
(51) Int. Cl.: B62D 25/18, B62D 21/02, G01S 7/03, G01S 13/931

(54) **ATTACHMENT STRUCTURE FOR DETECTION DEVICE**

(30) Priority: 16.12.2022 JP 2022200781
(71) Applicant: Daimler Truck AG, 70771 Leinfelden-Echterdingen (DE)
(72) Inventor: YAMAMOTO, Kotaro, Kawasaki-shi, Kanagawa 211-8522 (JP)
(74) Representative: Hofstetter, Schurack & Partner
(86) International application number: PCT/JP2023/031404
(87) International publication number: WO 2024/127735

(57) **Abstract**

The attachment structure for a detection device according includes: a mudguard 20 mounted on a vehicle body frame 10 of a vehicle 2 and arranged on a rear side of a wheel of the vehicle 2, including an outer face 20A on an outer side in a vehicle width direction and a rear face 20B being connected to the outer face 20A on a rear side in a vehicle length direction, and provided with an opening 24 on the outer face 20A; a detection device 1 provided for detecting an object on a side of the vehicle 2 and arranged in the opening 24 of the mudguard 2; and a bracket 30 located in front of the rear face 20B and arranged to overlap the outer face 20A when viewed from the outer side in the vehicle width direction, attached to the vehicle body frame at a first end, attached with the detection device 1 at a second end, and cantilevering the detection device 1 while the detection device in arranged in the opening 24.

## Description

### [Technical Field]

The embodiment discussed herein relates to an attachment structure (a mounting structure) for a detection device, which detects an object on the side of a vehicle.

### [Background Art]

Conventionally, a technique has been developed which detects a person and an object such as a vehicle exist on a side of a vehicle and alerts the driver or controls the vehicle. For example, Patent Literature 1 discloses an attachment structure in which a radar device for detecting a person and an object such as a vehicle exist on the side of a vehicle is attached in the vicinity of a fuel tank arranged on a side of a vehicle body of a truck.

### [Citation List]

### [Patent Literature]

[Patent Literature 1] JP 2019-111857 A

### [Summary of Invention]

### [Technical Problem]

The structure that attaches a radar device in the vicinity of a tank as in the technique disclosed in Patent Literature 1 may fail in sufficiently securing the radar irradiating range by the radar device. In other words, due to the revision of the regulation of vehicle side monitoring, a wider range of sides must be monitored than those in conventional monitoring, and the structure that attaches the radar device in the vicinity of the fuel tank like Patent Literature 1 may have a possibility of not satisfying the regulation.

That is, in order to monitor the side of vehicle over a wider range with a detection device for detecting an object that exists on a side of the vehicle, the detection device needs to be mounted on a different position.

However, the mounting position of the detection device may be limited due to the positional relationship of layout of other components with the detection device on the side of the vehicle. Therefore, the conventional technique disclosed in Patent Literature 1 has room for improving in an aspect of ensuring the mountability of the detection device.

With the foregoing problems in view, one of the objects of the present embodiment is to ensure the mountability of the detection device for detecting an object on a side of a vehicle in an attachment structure for the detection device.

### [Solution to Problem]

The present embodiment is made in order to solve at least part of the above problems and can be achieved in the following embodiment or application.
(1) The attachment structure for a detection device according to the present application includes: a mudguard mounted on a vehicle body frame of a vehicle and arranged on a rear side of a wheel of the vehicle, including an outer face forming a wall on an outer side in a vehicle width direction and a rear face being connected to the outer face and forming a wall on a rear side in a vehicle length direction, and provided with an opening communicating the outer side and an inner side in the vehicle width direction on the outer face; a detection device provided for detecting an object on a side of the vehicle and arranged in the opening of the mudguard; and a bracket located in front of the rear face and arranged to overlap the outer face when viewed from the outer side in the vehicle width direction, directly or indirectly attached to the vehicle body frame at a first end, attached with the detection device at a second end, and cantilevering the detection device while the detection device is arranged in the opening.
   With this configuration, the bracket is located in front of the rear face of the mudguard, is arranged to overlap the outer face when viewed from the outer side in the vehicle width direction, and cantilevers the detection device while the detection device is arranged in the opening of the outer face. That is, since bracket is arranged inside the mudguard, the detection device can be attached to the mudguard. As the above structure, even if the bracket is arranged inside the mudguard, the detection device can emit radio waves (electromagnetic waves) of the radar outward through the opening of the outer face. Accordingly, the detection device can be appropriately attached to the mudguard. Therefore, it is possible to secure the mountability of the detection device in the attachment structure of the detection device.
(2) The attachment structure for a detection device according to the present application may further include a rear-face-side stay arranged on a rear side of the rear face in the vehicle length direction, and fixed to the rear face, and an auxiliary bracket attached to the bracket at a first end in the vehicle length direction, attached to the rear-face-side stay at a second end in the vehicle length direction, connecting the bracket to the rear-face-side stay.
   According to this configuration, the auxiliary bracket is arranged along the vehicle length direction between the bracket and the rear face of the mudguard, so that the bracket and the rear-face-side stay are connected to each other via the auxiliary bracket. For the above, the auxiliary bracket supports the bracket so as to suppress the effect of extemal force along the vehicle length direction. This reinforces the bracket. Consequently, the vibration of the detection device can be suppressed.
(3) In the attachment structure for a detection device according to the present application, the bracket may be arranged in a non-contact manner with respect to the opening in a state where the detection device is arranged in the opening. Accordingly, it is possible to prevent the bracket from rubbing against the mudguard. In addition, since vibration is less likely to be transmitted from the mudguard to the bracket, the vibration of the detection device is suppressed.
(4) In the attachment structure for a detection device according to the present application, wiring of the detection device may be arranged along a rear face in the vehicle length direction of the bracket. With this configuration, the bracket can function as a protective member that avoids hitting of scattering stones and the like from the front side of the traveling vehicle on the wiring.
(5) The attachment structure for a detection device according to the present application may further include a rear-face-side stay arranged on a rear side in the vehicle length direction of the rear face of the mudguard and fixed to the rear face, an upper-face-side stay fixed to an upper face forming a wall on an upper side of the mudguard, and a front-end-side stay fixed to a front end in the vehicle length direction of the mudguard, wherein the bracket may be arranged on the front side in the vehicle length direction of the rear-face-side stay, arranged on the rear side in the vehicle length direction of the front-end-side stay, and arranged under the upper-face-side stay.
   According to this configuration, the bracket is arranged on the front side in the vehicle length direction of the rear-face-side stay, is arranged on the rear side in the vehicle length direction of the front-end-side stay, and is arranged under the upper-face-side stay. This allows the bracket to be arranged inside the mudguard without interfering with the stays that supports the mudguard.
(6) In the attachment structure for a detection device according to the present application, the upper-face-side stay may be arranged on the front side in the vehicle length direction of the rear-face-side stay and arranged on the rear side in the vehicle length direction of the front-end-side stay, and the bracket may be indirectly attached to the vehicle body frame via the front-end-side stay.

This can arrange the bracket inside the mudguard without interfering with the stays that support the mudguard and also stably attach the bracket to the vehicle body frame via the upper-face-side stay.

### [Advantageous Effects of Invention]

According to the embodiment disclosed herein, it is possible to secure the mountability of detection device in the attachment structure for the detection device that detects an object that exists on a side of a vehicle.

### [Brief Description of Drawings]

FIG. 1 is a perspective view of a front part of a vehicle applied with an attachment structure for a detection device according to an application viewed from rear left.
FIG. 2 is a perspective view of a state where a mudguard is removed from FIG. 1.
FIG. 3 is a side view enlarging the attachment structure for a detection device of FIG. 1.
FIG. 4 is a rear elevation of the attachment structure for a detection device of FIG. 1 viewed from the rear side in the vehicle length direction.
FIG. 5 is a side view enlarging a part of the attachment structure for a detection device of FIG. 1.
FIG. 6 is an enlarged perspective view of the detection device of FIG. 1 and a second end of a BSA bracket viewed from the inside of the mudguard.

### [Description of Embodiments]

With reference to the accompanying drawings, an embodiment will now be described. The following embodiment is illustrative only and are not intended to exclude the application of various modifications and techniques not explicitly described in this embodiment. The configurations of the following embodiment may be variously modified and implemented without departing from the scope thereof. Furthermore, the configurations can be selected or omitted according to the requirement, or can be combined appropriately.

In the drawings, "FR" indicates the front side of vehicle, "UP" indicates the upper side, and "IN" indicates the inner side of the vehicle width direction. The opposite to the inner side of the vehicle width direction is the outer side in the vehicle width direction. In the following explanation, the front-rear direction means the front-rear direction of the vehicle, and the left-right direction means the left-right direction of the vehicle directing forward.

### 1. Configuration

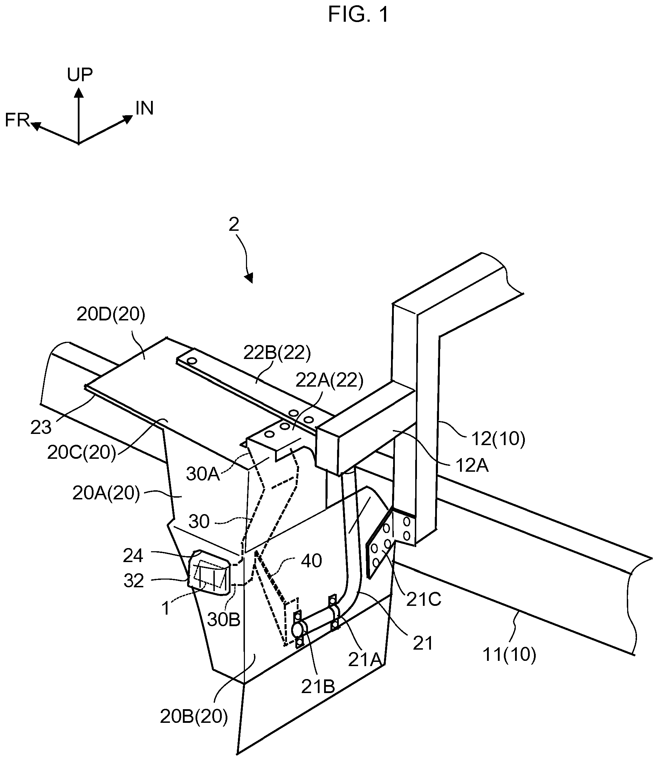

FIG. 1 is a perspective view of a forward part of a vehicle 2 applied with an attachment structure for a detection device 1 (shown with a dashed line) according to an embodiment viewed from rear left, and partly omits the detection device 1. The attachment structures for detection devices 1 are mounted on the left and right sides of a vehicle 2 and have substantially the same (left-right symmetrical) configurations on the left and right sides. The following description focuses on the left side and omits the details on the right side.

The detection device 1 is a vehicle side monitor that detects an object such as a person or another vehicle that exists on the side of the vehicle 2. The detecting signal of the detection device 1 is used by a BSA (blind spot assist) device that alerts a driver when a person or another vehicle that exists on the side of the vehicle 2 is detected. An example of the detection device 1 includes a millimeter-wave radar that emits millimeter waves toward the irradiation range on the side of the vehicle 2.

The vehicle 2 of FIG. 1 is a truck including a vehicle body frame 10 and a cab (not shown) arranged above a front portion of the vehicle body frame 10.

The vehicle body frame 10 has a ladder frame structure. Specifically, the vehicle body frame 10 includes a pair of side rails 11 (only one on the left side appears in the drawing) and multiple cross members (not shown). The side rails 11 is extending in the vehicle length direction (front-rear direction) and spaced apart from each other in vehicle width direction (left-right direction). The vehicle body frame 10 is ladder-shaped.

The front portion of the vehicle body frame 10 is provided with a cab bridge 12 that supports a rear end of the cab from below. The cab bridge 12 extends upward from both of the pair of side rails 11 and is fixed across side rails 11 to form an inverted U-shape or an arch-like shape.

A mudguard 20 is provided on the outer side (outer side in the vehicle width direction) of the vehicle body frame 10.

The mudguard 20 is a mud protection member arranged behind a front wheel (not shown) of the vehicle 2.

The mudguard 20 is configured as a cover that surrounds three sides of the outer side, the rear side, and the upper side. Specifically, the mudguard 20 includes an outer face 20A forming a wall on the outer side of the vehicle width direction, a rear face 20B continuously connected to the rear end of the outer face 20A and forming a wall on a rear side in the vehicle length direction, and an upper face 20C continuously connected to upper end of the outer face 20A and the rear face 20B and forming a wall (a flat roof) on the upper side. In this description, the space surrounded by outer face 20A, the rear face 20B, and the upper face 20C is referred to as the "inside (inner side) of the mudguard 20".

On the outer face 20A, an opening 24 is formed to penetrate along the vehicle width direction. The opening 24 is a window that communicates the outer side (outside) with the inner side (inside) in the vehicle width direction, and is provided to allow an outer cover 32, which will be described below, to protrude (pass through) to the outer side of the mudguard 20. That is, the opening 24 is provided on the outer face 20A located on the front side of the rear face 20B of the mudguard 20, and the detection device 1 is engaged with the opening 24. The size and shape of the opening 24 are set according to the appearance shape and size of the detection device 1.

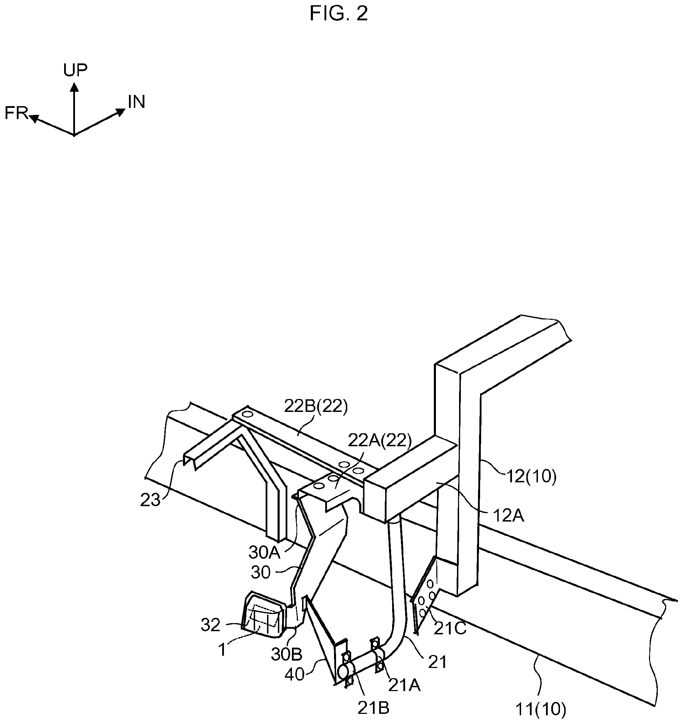

FIG. 2 is a perspective view of a state where the mudguard 20 is removed from FIG. 1. As shown in FIGs. 1 and 2, the mudguard 20 is fixed to the vehicle body frame 10 at the three points on the rear face 20B, the upper face 20C, and the front end 20D (i.e., the front end of the upper face 20C ) of the mudguard 20 by a rear-face-side stay 21, an upper-face-side stay 22, and a front-end-side stay 23.

Between the rear-face-side stay 21, the upper-face-side stay 22 and the front-end-side stay 23, both the rear-face-side stay 21 and the upper-face-side stay 22 are fixed to an upper bracket 12A, which extends outward from the cab bridge 12, above the mudguard 20 (above the side rail 11). The front-end-side stay 23 is fixed to the outer face of the side rail 11.

The rear-face-side stay 21 is formed of an L-shaped pipe member and is arranged on the rear side of the mudguard 20. The rear-face-side stay 21 is fixed to the upper bracket 12A at the upper end thereof, extends downward from the upper bracket 12A along the rear face 20B, is bent outward at the lower end of the rear face 20B to extend outward in the vehicle width direction. The rear-face-side stay 21 is fixed to the lower end of the rear face 20B by two supporting clasps 21A and 21B spaced apart from each other in the vehicle width direction at a portion extending in the vehicle width direction.

As shown in FIG. 1, the rear face 20B is also fixed to a rear-face-side sub-stay 21C protruding outward from the lower end of the cab bridge 12.

The upper-face-side stay 22 is arranged on the front side in the length direction of the rear-face-side stay 21 and on the rear side in the vehicle length direction of the front-end-side stay 23, and includes a first member 22A extending outward from the upper bracket 12A and a second member 22B extending forward (forward in the vehicle length direction) from the upper bracket 12A. The first member 22A of the upper-face-side stay 22 is fixed to the upper face 20C of the mudguard 20 at two (two or more) points spaced apart from each other along the vehicle width direction. The second member 22B of the upper-face-side stay 22 extends over the substantially entire length in the vehicle length direction of the upper face 20C, is in contact with the upper face 20C, and is fixed to the upper face 20C at the front end thereof.

The front-end-side stay 23 extends outward and upward from the side rail 11 and supports the front end (upper face of the front end of the mudguard 20) of the upper face 20C from the bottom side.

The front-end-side stay 23 and front end of the upper face 20C are fixed at two (two or more) points spaced apart along the vehicle width direction.

As described above, the mudguard 20 is attached to the vehicle body frame 10 via the rear-face-side stay 21, the upper-face-side stay 22 and the front-end-side stay 23.

In the attachment structure for the detection device 1 according to the present application, a BSA bracket 30 ("bracket", indicated by a dashed line in FIG. 1) that supports the detection device 1 is arranged the inside the mudguard 20.

As shown in FIG. 1, the BSA bracket 30 (indicated by the dashed line in FIG. 1) arranged inside the mudguard 20 is located on the front side of the rear face 20B of the mudguard 20, and arranged to overlap the outer face 20A of the mudguard 20 when viewed from the outer side in the vehicle width direction. In other words, as shown in FIG. 2, the BSA bracket 30 is arranged on the front side of the rear-face-side stay 21 and on the rear side of the front-end-side stay 23. The BSA bracket 30 is arranged below the upper-face-side stay 22 and above the lower end of the side rail 11.

As shown in FIGs. 1 and 2, the BSA bracket 30 is fixed to the side of the vehicle body frame 10 at a first end 30A on the inner side in the vehicle width direction, extends outward and downward from the side of the vehicle body frame 10 (from the inner side in the vehicle width direction). The detection device 1 is attached to a second end 30B of the BSA bracket 30 along with the outer cover 32.

That is, as shown in FIG. 1, the BSA bracket 30 cantilevers the detection device 1 while (engaging) the detection device 1 is arranged at the opening 24. (Like a cantilever beam, the BSA bracket 30 supports the detection device 1 at one end, the detection device 1 being arranged in the opening 24.)

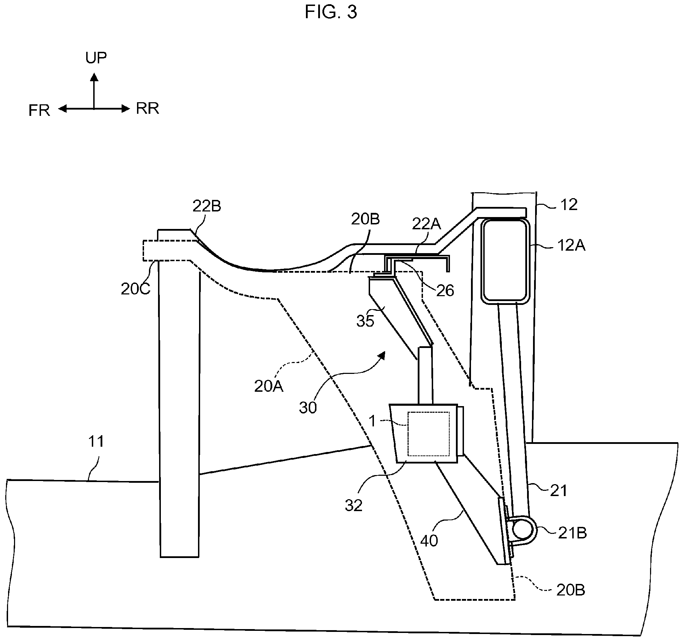

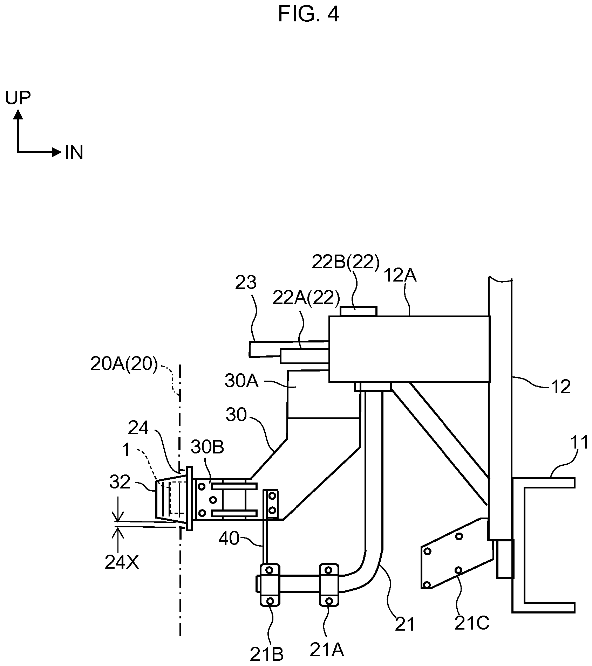

FIG. 3 is a side view enlarging the attachment structure for the detection device 1 of FIG. 1. FIG. 4 is a rear elevation of the attachment structure for the detection device 1 viewed from the rear side in the vehicle length direction. In FIG. 3, the mudguard 20 is indicated by the dashed line. Further, in FIG. 4, a part of the mudguard 20 is indicated by the one-dot dashed line, and a part of the attachment structure for the detection device 1 is omitted.

As shown in FIGs. 3 and 4, the BSA bracket 30 is formed by bending a flat plate member having face extending in both the vehicle width direction and the up-down direction. Specifically, as shown in FIG. 3, when viewed along the vehicle width direction, the BSA bracket 30 has a doglegged shape (polygonal line shape) which has an inclined portion and a vertical portion. The inclined portion is extending rearward as approaching to the lower side. The vertical portion is extending in the up-down direction. The inclined portion and the vertical portion are continuously connected to each other. Further, as shown in FIG. 4, when viewed along the vehicle length direction, the BSA bracket 30 is formed in a "C-shape" in which a portion extending in the up-down direction from the first end 30A, a portion extending outward in the vehicle width direction as approaching the lower side, and a portion extending outward in the vehicle width direction are connected to one another.

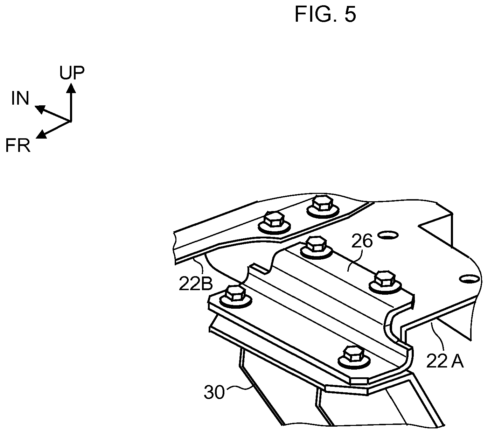

The first end 30A of the BSA bracket 30 is fixed to the upper-face-side stay 22 together with the upper face 20C of the mudguard 20. FIG. 5 is an enlarged view of the fixing point between the BSA bracket 30 and both the mudguard 20 and the upper-face-side stay 22. Under a state where the upper face 20C of the mudguard 20 is overlaid with the first member 22A of the upper-face-side stay 22 as shown in FIG. 3, a supporting bracket 26 arranged on the upper face of the first member 22A is screwed with the first end 30A of the BSA bracket 30 arranged on the lower face of the upper face 20C of the mudguard 20. This fixes the first end 30A of the BSA bracket 30 to the upper-face-side stay 22 and the upper face 20C of the mudguard 20 are fixed (these components are fastened together). Therefore, the BSA bracket 30 of the present embodiment is indirectly attached to the vehicle body frame 10 via the upper-face-side stay 22 and the upper face 20C of the mudguard 20.

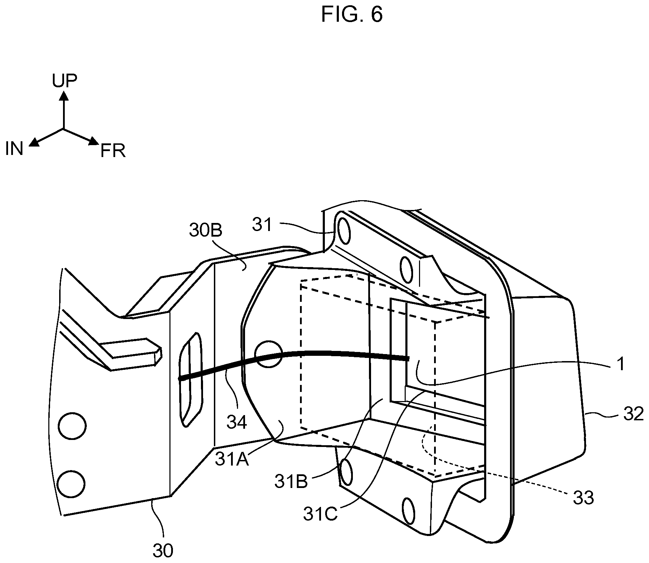

FIG. 6 is an enlarged perspective view of the second end 30B of the BSA bracket 30 viewed from the inside of the mudguard 20. In FIG. 6, the mudguard 20 is omitted.

As shown in FIG. 6, the second end 30B of the BSA bracket 30 forms a face extending along the vehicle width direction and the up-down direction. With respect to the second end 30B, three elements are mounted on it. The three elements include a holder 31 that holds the detection device 1, an outer cover 32 that covers the holder 31 from the outside, and a protection cover 33 (indicated by a dashed line in the drawing) covering the detection device 1 held by holder 31 from the inside.

The holder 31 is formed in an L-shape in the upper view, and includes a first face 31A and a second face 31B. The first face 31A is forming a fixing face on which the second end 30B is fixed. The second face 31B is forming a holding face on which detection device 1 is held.

The first face 31A is a face extending along the vehicle width direction and the up-down direction like the second end 30B. The second face 31B is connected to the outer end in the vehicle width direction of the first face 31A and protrudes forward from the first face 31A. The second face 31B is formed with a window 31C communicating the inner side and the outer side in the vehicle width direction. The detection device 1 is held in this window 31C.

The outer cover 32 is a vehicle outer side cover member formed to have a hat-shaped cross section. The outer cover 32 is arranged on the outer side in the vehicle width direction of the detection device 1 (indicated by a dashed line in FIG. 1) as shown in FIG. 1. The outer cover 32 is fixed to a face of the holder 31 facing outward and covers the detection device 1 from the outer side.

The outer cover 32 is formed of a material at a plate thickness through which material and thickness millimeter waves emitted from the detection device 1 can pass. The outer size of the outer cover 32 is set to be smaller than the aperture size of the opening 24 formed on the outer face 20A of the mudguard 20, so that the outer cover 32 can protrude from (be inserted through) the inner side to the outer side of the mudguard 20 through the opening 24.

The protection cover 33 is a cover member that protects the detection device 1 held by the holder 31 from scattering stone and the like while the vehicle 2 is running. For example, the protection cover 33 is provided so as to cover a face facing the inner side in the vehicle width direction of the holder 31. The protection cover 33 covers four faces composed of the inner side in the vehicle width direction, the upper side, the lower side, and the front side in the vehicle length direction. The protection cover 33 is formed with screw holes (not shown) for the attachment to the second end 30B of the BSA bracket 30 and the first face 31A of the holder 31.

When the holder 31, the outer cover 32, and the protection cover 33 are to be attached to the second end 30B of the BSA bracket 30, the outer cover 32 is fixed to the holder 31 under a state where the detection device 1 attached to the holder 31. Then the holder 31 and the outer cover 32 are placed on the second end 30B of the BSA bracket 30 while being arranged in opening 24. After that, the protection cover 33 is fit into the holder 31, and the first face 31A of the holder 31 and the protection cover 33 are fixed (fastened together) to the second end 30B of the BSA bracket 30.

Under the state where the second end 30B of the BSA bracket 30 is attached with the holder 31, the outer cover 32 and the protection cover 33, a gap 24X is formed between the opening 24 and the outer cover 32 as shown in FIG. 4. This means that the outer size of the outer cover 32 and the aperture size of the opening 24 are set such that the outer cover 32 (i.e., part of the BSA bracket 30) is arranged to be distant from the opening 24 at the gap 24X. In other words, the BSA bracket 30 is arranged in a non-contact manner with respect to the opening 24 in a state where the detection device 1 is arranged in the opening 24.

The gap 24X is set to an appropriate size that can avoid the contact between (interference) the outer cover 32 (on the side of the bracket 30) and the opening 24 (on the side of the mudguard 20). From the viewpoint of ensuring the mud protectability of the mudguard 20, the aerodynamic performance during the vehicle is running, and the aesthetic appearance of the mudguard 20, it is preferable to set the gap 24X to a minimum that can avoid the contact (interference) without excessively widening the gap 24X.

In the example of FIG. 6, the wiring 34 of the detection device 1 being held by the holder 31 is arranged along the rear face in the vehicle length direction of the BSA bracket 30. The wiring 34 is connected to a non-illustrated control device and transmits the detected signal of the detection device 1.

In this instance, since the BSA bracket 30 is arranged on the front side of the wiring 34, the BSA bracket 30 can function as a protective member that avoids hitting of scattering stones and the like from the front of the traveling vehicle 2 on the wiring 34.

In the BSA bracket 30 according to the present application, a rib 35 is formed as shown in FIG. 3 and an auxiliary bracket 40 shown in FIGs. 2 and 3 is provided, in order to reinforce the BSA bracket 30 against extemal force acting on the BSA bracket 30 in the front-rear direction.

The auxiliary bracket 40 is a support member interposed along the vehicle length direction between the BSA bracket 30 and the rear face 20B of the mudguard 20.

For the purpose of suppressing the extemal force of the vehicle length direction (front-rear direction) applied to the BSA bracket 30, the auxiliary bracket 40 is formed of a flat plate member having face extending in both the vehicle length direction and the up-down direction.

The auxiliary bracket 40 is fixed to the BSA bracket 30 at a first end 40A thereof on the front side of the vehicle length direction. The fixing point of the auxiliary bracket 40 to the BSA bracket 30 is set, for example, in the vicinity of the second end 30B of the BSA bracket 30 and an inner side in the vehicle width direction of the attachment position of the holder 31.

The auxiliary bracket 40 is fixed to the rear face 20B of the mudguard 20 at the second end 40B thereof on the rear side in the vehicle length direction. Specifically, the auxiliary bracket 40 is fixed to (fastened together with) the rear-face-side stay 21, which fixes the rear face 20B of the mudguard 20, via the supporting clasps 21A and 21B at the second end 40B on the rear side of the vehicle length direction. That is, the auxiliary bracket 40 connects the BSA bracket 30 to the rear-face-side stay 21 in the vehicle length direction (front-rear direction).

### 2. Actions and Effect

The above-described embodiment brings the following advantageous effects.

The attachment structure for the detection device 1 according to the present application includes the detection device 1, the mudguard 20, and the BSA bracket 30. In this attachment structure for the detection device 1, the BSA bracket 30 is located in front of the rear face 20B of the mudguard 20, is arranged to overlap the outer face 20A when viewed from the outer side in the vehicle width direction, and cantilevers (supports) the detection device 1 while the detection device 1 is arranged in the opening 24 of the outer face 20A.

According to this configuration, since the BSA bracket 30 is arranged inside the mudguard 20, the detection device 1 can be attached to the inside of the mudguard 20. As the above structure, even if the BSA bracket 30 is arranged inside the mudguard 20, the detection device 1 can emit radio waves of the radar outward through the opening 24 of the outer face 20A. Accordingly, the detection device 1 can be appropriately attached to the mudguard 20. Therefore, it is possible to secure the mountability of the detection device 1 in the attachment structure for the detection device 1.

Further, in the attachment structure for the detection device 1 according to the present application, since the auxiliary bracket 40 is interposed along the vehicle length direction between the BSA bracket 30 and the rear face 20B of the mudguard 20, the BSA bracket 30 and the rear-face-side stay 21 are connected to each other via the auxiliary bracket 40. For the above, the auxiliary bracket 40 supports the BSA bracket 30 so as to suppress the effect of extemal force along the vehicle length direction. This reinforces the BSA bracket 30. Consequently, the vibration of the detection device 1 can be suppressed.

Further, in the attachment structure of the detection device 1 according to the present application, the BSA bracket 30 is arranged in a non-contact manner with respect to the opening 24 in a state where the detection device 1 is arranged in the opening 24. Accordingly, it is possible to prevent the BSA bracket 30 from rubbing (attrition) against the mudguard 20. In addition, since vibration is less likely to be transmitted from the mudguard 20 to the BSA bracket 30, the vibration of the detection device is suppressed.

In addition, in the attachment structure of the detection device 1 according to the present application, since the wiring 34 of the detection device 1 is arranged along the rear face in the vehicle length direction of the BSA bracket 30, the BSA bracket 30 functions as a protective member that avoids hitting of scattering stones and the like from the front side on the wiring 34.

In addition, in the mounting configuration of detection device 1 according to this application Example, the BSA bracket 30 is arranged on the front side in the width direction of the rear-face-side stay 21 and on the rear side in the vehicle length direction of the front-end-side stay 23, and is arranged under the upper-face-side stay 22. For the above, the BSA bracket 30 can be arranged inside of the mudguard 20 without interfering with the stays 21-23, which support the mudguard 20.

In addition, in the attachment structure of the detection device 1 according to the present application, the BSA bracket 30 is indirectly attached to the vehicle body frame 10 via the upper-face-side stay 22 arranged on the front side in the length direction of the rear-face-side stay 21 and on the rear side in the vehicle length direction of the front-end-side stay 23. For the above, the BSA bracket 30 can be arranged inside of the mudguard 20 without interfering with the stays 21-23, which support the mudguard 20, and the BSA bracket 30 can be stably attached to the vehicle body frame 10 via the upper-face-side stay 22.

### 3. Miscellaneous

In the above embodiment, the BSA bracket 30 is indirectly attached to the vehicle body frame 10 via the upper-face-side stay 22. Alternatively, the BSA bracket 30 may be directly attached to the vehicle body frame 10, such as the side rail 11 or the cab bridge 12, for example.

In addition to the auxiliary bracket 40, a bracket for reinforcing the BSA bracket 30 may be provided. Such a bracket for reinforcement is exemplified by one protruding to the outer side in the vehicle width direction from the rear-face-side sub-stay 21C (see FIG. 1), which protrudes outward from the lower end of the cab bridge 12 and also connecting the rear-face-side sub-stay 21C to the BSA bracket 30.

Other examples of the bracket for reinforcement are accomplished by a rib formed to reinforce the BSA bracket 30 and/or the auxiliary bracket 40, and by forming the BSA bracket 30 and/or the auxiliary bracket 40 of high-rigid members each having an L-shaped cross section or a C-shaped cross section.

The device referred to as a BSA (blind spot assist) in this description has various alternative nominal designations (names). In addition to BSA, such a device is also referred to as, for example, BSM (blind spot monitoring). Therefore, the term "BSA" in this description may be replaced with other well-known designations such as "BSM".

In addition, the term "BSA" in this description may be a device that alerts the driver when detecting a person, another vehicle and the like that exist on the side of the own vehicle, or that controls the own vehicle by means of braking control or steering control, for example, in place of or in addition to the above alert when detecting a person, another vehicle and the like that exist on the side of the own vehicle.

### 4. Additional statement (Appendices)

The following appendices will now be disclosed in relation to embodiment including the above modifications.

### (Appendix 1)

An attachment structure for a detection device, the attachment structure comprising:
a mudguard mounted on a vehicle body frame of a vehicle and arranged on a rear side of a wheel of the vehicle, including an outer face forming a wall on an outer side in a vehicle width direction and a rear face being connected to the outer face and forming a wall on a rear side in a vehicle length direction, and provided with an opening communicating the outer side and an inner side in the vehicle width direction on the outer face;
a detection device provided for detecting an object on a side of the vehicle and arranged in the opening of the mudguard; and
a bracket located in front of the rear face and arranged to overlap the outer face when viewed from the outer side in the vehicle width direction, directly or indirectly attached to the vehicle body frame at a first end, attached with the detection device at a second end, and cantilevering the detection device while the detection device is arranged in the opening.

### (Appendix 2)

The attachment structure according to claim 1, further comprising:
a rear-face-side stay arranged on a rear side of the rear face in the vehicle length direction, and fixed to the rear face; and
an auxiliary bracket attached to the bracket at a first end in the vehicle length direction, attached to the rear-face-side stay at a second end in the vehicle length direction, connecting the bracket to the rear-face-side stay.

### (Appendix 3)

The attachment structure according to appendix 1 or 2, wherein
the bracket is arranged in a non-contact manner with respect to the opening in a state where the detection device is arranged in the opening.

### (Appendix 4)

The attachment structure according to any one of appendices 1-3, wherein
wiring of the detection device is arranged along a rear face in the vehicle length direction of the bracket.

### (Appendix 5)

The attachment structure according to any one of appendices 1-4, further comprising:
a rear-face-side stay arranged on a rear side in the vehicle length direction of the rear face of the mudguard and fixed to the rear face;
an upper-face-side stay fixed to an upper face forming a wall on an upper side of the mudguard; and
a front-end-side stay fixed to a front end in the vehicle length direction of the mudguard, wherein
the bracket is arranged on the front side in the vehicle length direction of the rear-face-side stay, is arranged on the rear side in the vehicle length direction of the front-end-side stay, and is arranged under the upper-face-side stay.

### (Appendix 6)

The attachment structure according to appendix 5, wherein
the upper-face-side stay is arranged on the front side in the vehicle length direction of the rear-face-side stay and is arranged on the rear side in the vehicle length direction of the front-end-side stay, and
the bracket is indirectly attached to the vehicle body frame via the front-end-side stay.

### [Reference Signs List]

- 1: Detection device
- 2: Vehicle
- 10: Vehicle body frame
- 11: Side rail
- 12: Cab bridge
- 12A: Upper bracket
- 20: Mudguard
- 20A: Outer face
- 20B: Rear face
- 20C: Upper face
- 20D: Front end
- 21: Rear-face-side stay
- 21A: Supporting clasp
- 21B: Supporting clasp
- 21C: Rear-face-side sub-stay
- 22: Upper-face-side stay
- 22A: First member
- 22B: Second member
- 23: Front-end-side stay
- 24: Opening
- 24X: Gap
- 26: Jig
- 30: BSA bracket (bracket)
- 30A: First end
- 30B: Second end
- 31: Holder
- 31A: First face
- 31B: Second face
- 31C: Window
- 32: Outer cover
- 33: Protection cover
- 34: Wiring (wire, cable)
- 35: Rib
- 40: Auxiliary bracket
- 40A: First end
- 40B: Second end

## Claims

1. An attachment structure for a detection device, the attachment structure comprising:
a mudguard mounted on a vehicle body frame of a vehicle and arranged on a rear side of a wheel of the vehicle, including an outer face forming a wall on an outer side in a vehicle width direction and a rear face being connected to the outer face and forming a wall on a rear side in a vehicle length direction, and provided with an opening communicating the outer side and an inner side in the vehicle width direction on the outer face;
a detection device provided for detecting an object on a side of the vehicle and arranged in the opening of the mudguard; and
a bracket located in front of the rear face and arranged to overlap the outer face when viewed from the outer side in the vehicle width direction, directly or indirectly attached to the vehicle body frame at a first end, attached with the detection device at a second end, and cantilevering the detection device while the detection device is arranged in the opening.

2. The attachment structure according to claim 1, further comprising:
a rear-face-side stay arranged on a rear side of the rear face in the vehicle length direction, and fixed to the rear face; and
an auxiliary bracket attached to the bracket at a first end in the vehicle length direction, attached to the rear-face-side stay at a second end in the vehicle length direction, connecting the bracket to the rear-face-side stay.

3. The attachment structure according to claim 1, wherein
the bracket is arranged in a non-contact manner with respect to the opening in a state where the detection device is arranged in the opening.

4. The attachment structure according to claim 1, wherein
wiring of the detection device is arranged along a rear face in the vehicle length direction of the bracket.

5. The attachment structure according to claim 1, further comprising:
a rear-face-side stay arranged on a rear side in the vehicle length direction of the rear face of the mudguard and fixed to the rear face;
an upper-face-side stay fixed to an upper face forming a wall on an upper side of the mudguard; and
a front-end-side stay fixed to a front end in the vehicle length direction of the mudguard, wherein
the bracket is arranged on the front side in the vehicle length direction of the rear-face-side stay, is arranged on the rear side in the vehicle length direction of the front-end-side stay, and is arranged under the upper-face-side stay.

6. The attachment structure according to claim 5, wherein
the upper-face-side stay is arranged on the front side in the vehicle length direction of the rear-face-side stay and is arranged on the rear side in the vehicle length direction of the front-end-side stay, and
the bracket is indirectly attached to the vehicle body frame via the front-end-side stay.
